# EUROPÄISCHE PATENTSCHRIFT

(11) **EP 1 200 753 B1**
(45) Veröffentlichungstag und Bekanntmachung des Hinweises auf die Patenterteilung: **14.05.2003**
(21) Anmeldenummer: 00958112.5
(22) Anmeldetag: 07.07.2000
(51) Int. Cl.: F16G 13/16

(54) **ENERGIEZUFÜHRUNGSKETTE**
ENERGY SUPPLY CHAIN
CHAINE ARTICULEE POUR CABLES D'ALIMENTATION

(30) Priorität: 30.07.1999 DE 29913063 U
(43) Veröffentlichungstag der Anmeldung: 02.05.2002
(73) Patentinhaber: IGUS SPRITZGUSSTEILE FÜR DIE INDUSTRIE GmbH, D-51147 Köln (DE)
(72) Erfinder: KUNERT, Carsten, D-40789 Monheim (DE); HERMEY, Andreas, D-53773 Hennef (DE); BLASE, Günter, D-51429 Bergisch Gladbach (DE)
(74) Vertreter: Patentanwälte Lippert, Stachow, Schmidt & Partner
(86) Internationale Anmeldenummer: DE0002214
(87) Internationale Veröffentlichungsnummer: WO01009532

(56) Entgegenhaltungen:
- DE-A- 19 752 377
- DE-C- 4 302 757
- DE-U- 29 913 063
- US-A- 4 944 687

## Beschreibung

Die Erfindung betrifft eine Energiezuführungskette zur Führung von Kabeln und Schläuchen zwischen einem ortsfesten und einem beweglichen Anschlusspunkt oder zwischen zwei relativ zueinander beweglichen Anschlusspunkten, insbesondere als Führung von Schläuchen und/oder Kabeln zur externen Versorgung von Anwendungsinstallationen an Roboterarmen mit mehreren Dreh- und/oder Schwenkfreiheitsgraden, mit einer Anzahl gelenkig miteinander verbundener Kettenglieder, die einen Aufnahmeraum für die Kabel und/oder Schläuche bilden.

Zur Führung von Schläuchen und/oder Kabeln zur Leitung von Energie in Form von Strom, Wasser, Druckluft oder Hydraulikflüssigkeit zur externen Versorgung von Anwendungsinstallationen an Roboterarmen finden bislang unterschiedlich bestückte gewellte und flexible Polyurethanschläuche Anwendung. Unter Anwendungsinstallationen sind beispielsweise an den abliegenden Enden der Roboterarme vorgesehene Greifarme, Schweißzangen, Lackierpistolen oder dergleichen zu verstehen. Bei solchen Anwendungsinstallationen werden die Versorgungsschläuche und Versorgungsleitungen außerhalb der von den Roboterarmen gebildeten Hohlräume befestigt und geführt. Da Roboterarme bekanntlich eine Vielzahl von Dreh- und/oder Schwenkfreiheitsgraden aufweisen, müssen die Führungen für die Versorgungsleitungen, d.h. die gewellten Führungsschläuche eine Vielzahl von Schwenk- und Torsionsbewegungen nachvollziehen können. Die Krümmungsradien der Führungsschläuche müssen so ausgelegt sein, daß Längenänderungen zwischen der am abliegenden Ende des Roboterarms vorgesehenen Anwendungsinstallation und einem Anschlußpunkt beispielsweise an der Basis des Roboterarms ausgeglichen werden können. Die Radien der an dem Roboterarm verlegten Kabel- oder Schlauchführung in Form eines flexiblen PU-Schlauchs oder PU-Rohrs sind so gewählt, daß sie selbst einen Speicher oder eine Reserve für Längenänderungen bilden und so einen Längenausgleich zwischen der Anwendungsinstallation und dem Anschlußpunkt bilden. Bei kürzestem Abstand zwischen der Anwendungsinstallation und dem Anschlußpunkt, bei der sich die maximale Längenreserve ergibt, tendieren die übergroßen Radien der Führungsschläuche dazu, durchzuhängen. Ein solches Durchhängen der Führungsschläuche sollte möglichst vermieden werden, da die herunterhängende Schlauchreserve die Bewegungsfreiheit des Roboterarms beeinträchtigen kann. Um dies zu verhindern, ist es bekannt, die Radien bildenden Abschnitte des Führungschlauchs in Spiralfedern oder Federwendeln anzuordnen, die dem betreffenden Radius eine gewisse Steifigkeit vermitteln, die dem Durchhängen entgegenwirkt. Auch ist es bekannt, den Führungsschlauch in auf Federstützen befestigten Führungsbuchsen zu halten. Diese Federstützen wirken ebenfalls einem Durchhängen des Schlauchs in dem betreffenden Krümmungsradius entgegen.

Beide vorstehend beschriebenen Varianten zur Stabilisierung der Radien der Führungsschläuche besitzen den Nachteil, daß je nach Biege- und Torsionsbeanspruchung des Führungsschlauchs dieser in dem stabilisierten Bereich völlig unkontrolliert in Richtung des geringsten Biege- oder Torsionswiderstands ausweicht. Hieraus resultieren völlig unkontrollierte Beanspruchungen des Führungsschlauchs. Außerdem werden unter Umständen Bewegungswiderstände erzeugt, die den vorgegebenen Bewegungsrichtungen des Roboterarms entgegenwirken.

Schließlich hat die Verwendung von Führungsschläuchen den Nachteil, daß deren im Hinblick auf die enthaltenen Versorgungsleitungen maximale Biegebeanspruchung oder maximaler Biegeradius überschritten werden kann. Insbesondere bei unkontrolliertem Ausbauchen oder Ausweichen der Führungsschläuche im Bereich deren stabilisierter Radien kann es zu unzulässigen Knickbelastungen sowohl der Führungsschläuche als auch deren Innenleben kommen.

Eine Energiezuführungskette der eingangs genannten Art ist beispielsweise aus der DE 197 52 377 A1 bekannt. Die dort beschriebene Schleppkette enthält eine Vielzahl von schwenkbar aneinander angelenkten Kettengliedern, die jeweils einen in Längsrichtung der Kette verlaufenden Innenraum aufweisen. Durch diesen Innenraum führen Leitungen über die Gesamtlänge der Schleppkette. Zum Aufheben des in den einzelnen Gelenken auftretenden Spiels wird in den Innenraum ein Zugelement eingelegt, das ständig unter Zugspannung steht. Hierdurch soll die Lebensdauer der in der Schleppkette angeordneten elektrischen Leitungen verlängert werden.

Der Erfindung liegt daher die Aufgabe zugrunde, eine konstruktiv einfache Lösung zur Stabilisierung von Biegeradien von Kabel- und/oder Schlauchführungen bereitzustellen, bei der die vorstehend beschriebenen Nachteile weitestgehend vermieden werden. Der Erfindung liegt weiterhin die Aufgabe zugrunde, eine Führung von Schläuchen und/oder Kabeln zur externen Versorgung von Anwendungsinstallationen an Roboterarmen mit mehreren Dreh- und/oder Schwenkfreiheitsgraden zu schaffen, die die vorstehend beschriebenen Nachteile vermeidet.

Die Aufgabe wird gemäß der Erfindung gelöst durch eine Energiezuführungskette zur Führung von Kabeln, Schläuchen oder dergleichen Leitern zwischen einem ortsfesten und einem beweglichen Anschlußpunkt oder zwischen zwei relativ zueinander beweglichen Anschlußpunkten, insbesondere als Führung von Schläuchen und/oder Kabeln zur externen Versorgung von Anwendungsinstallationen an Roboterarmen mit mehreren Drehund/oder Schwenkfreiheitsgraden, mit einer Anzahl gelenkig miteinander verbundener Kettenglieder, die einen Aufnahmeraum für die Kabel und/oder Schläuche bilden, wobei wenigstens ein um seine Längsachse federnder Stab vorgesehen ist, welcher sich in Längsrichtung der Energiezuführungskette in deren Aufnahmeraum erstreckt und welcher bei Verschwenkung der Kettenglieder gegeneinander der Verschwenkung entgegenwirkende Rückstellkräfte erzeugt.

Die Verwendung einer solchen Energiezuführungskette als Führung der Kabel und/oder Schläuche hat den Vorzug, daß letztere optimal gegen übermäßige Knick- und Biegebeanspruchung oder Torsionsbeanspruchung geschützt sind. Eine Überschreitung des höchstzulässigen Biegeradius der Kabel und/oder Schläuche kann durch entsprechende Schwenkbegrenzungsanschläge der Kettenglieder zuverlässig vermieden werden. Darüber hinaus besitzt die im Innenraum der Kette angeordnete Stabilisierung der Schwenk- oder Biegeradien den Vorzug, daß ein Auswechseln der Führung für die Schläuche und Kabel ohne Manipulation und Demontage von an dem Roboterarm außen installierten Stabilisierungseinrichtungen möglich ist.

Vorzugsweise ist der Stab wenigstens bezüglich einiger Kettenglieder bei Krümmung der Energiezuführungskette in Längsrichtung verschieblich angeordnet, so daß in einfacher Art und Weise die Erzeugung beliebiger Schwenk- oder Krümmungsradien ohne Beeinträchtigung durch den das Stabilisierungselement bildenden Stab möglich ist. Der Stab erzeugt mit zunehmender Biegung Rückstellkräfte, die eine Bewegung der Energiezuführungskette in eine gestreckte Lage bewirken sollen.

Um unkontrollierten Ausweichbewegungen der Energiezuführungskette bei Einleitung von Schwenkbewegungen entgegenzuwirken, sind vorzugsweise zwei Stäbe aus Glasfiber vorgesehen, die sich wenigstens über eine Teillänge der Energiezuführungskette erstrecken. Diese Stäbe erstrecken sich vorzugsweise nur in dem Bereich der zu stabilisierenden Radien, wobei über die Länge der Stäbe in vorteilhafter Weise der zu stabilisierende Abschnitt der Energiezuführungskette einstellbar ist. Die Verwendung zweier Stäbe hat den Vorzug, daß die Rückstellkräfte symmetrisch in die Energiezuführungskette eingeleitet werden können, wodurch ebenfalls unkontrollierte Ausweichbewegungen der Energiezuführungskette vermieden werden. Ganz allgemein wirkt bereits eine im Vergleich zu einem Polyurethanschlauch verhältnismäßig steife Energiezuführungskette einer unkontrollierten Ausweichbewegung aufgrund in diese eingebrachter Federkräfte entgegen.

Zweckmäßigerweise sind die Stäbe jeweils in einem Führungsschlauch angeordnet, so daß eine Gleitbewegung bzw. eine Relativbewegung der Stäbe bei Durchbiegung der Energiezuführungskette bezüglich eines Teils des Biegeradius ohne Beeinträchtigung durch Reibung oder Kanten im Innenraum der Energiezuführungskette möglich ist.

Vorzugsweise sind die Stäbe außerhalb der Energiezuführungskette oder an einem Endbefestigungsteil der Kette einseitig festgelegt, beispielsweise mittels bekannter Klemmschellen.

Die Führungsschläuche erstrecken sich zweckmäßigerweise zwischen den Anschlußpunkten der Energiezuführungskette durchgehend.

Auf diese Art und Weise sind die Stäbe einfach austauschbar und können gegen andere Stäbe unterschiedlicher Stärke mit unterschiedlichen Rückstellkräften ausgetauscht werden. Die wirksame Länge der durch die Stäbe erzeugten Federung ist durch Herausziehen der Stäbe einfach einstellbar. Schließlich sind die Stäbe so auch auswechselbar, ohne daß die Energiezuführungskette oder die in dieser geführten Kabel und Schläuche an den Anschlußpunkten getrennt werden müßten.

Gemäß einer besonders bevorzugten Ausführungsform der erfindungsgemäß vorgesehenen Energiezuführungskette besitzen zumindest abschnittsweise mehrere zueinander benachbarte Kettenglieder zueinander zwei Schwenkfreiheitsgrade, deren Schwenkachsen vorzugsweise um 90° zueinander versetzt ausgerichtet sind, und die Kettenglieder weisen wenigstens in dem von den Stäben durchsetzten Bereich nur einen jeweils gleichgerichteten Schwenkfreiheitsgrad zueinander auf, so daß auch auf diese Art und Weise ein unzulässiges und unkontrolliertes Ausweichen der Energiezuführungskette in dem jeweiligen Biegeradius in eine nicht vorhersehbare Richtung vermieden wird.

Derartige Energiezuführungsketten sind beispielsweise aus der DE 43 02 757 Cl bekannt, auf die hier Bezug genommen wird.

Eine solche Energiezuführungskette besitzt abschnittsweise bezüglich der Drehung mehrerer zueinander benachbarter Elemente bzw. Kettenglieder zwei Freiheitsgrade, wobei jedes zweite Element 90° um die Längsachse der so gebildeten Kabelführung verdreht angeordnet ist, so daß drei Elemente halbkardanisch miteinander verbunden sind und die Energiezuführungskette abschnittsweise insgesamt drei Schwenkfreiheitsgrade bzw. Drehfreiheitsgrade erhält. Eine solche Energiezuführungskette ist insbesondere dazu geeignet, die von einem Roboterarm vollzogenen Bewegungen nachzuvollziehen, wobei vorteilhafterweise im Bereich der zu stabilisierenden Radien der Energiezuführungskette selbstverständlich nur ein Schwenkfreiheitsgrad der Kettenglieder zueinander vorgesehen ist.

Zweckmäßigerweise sind die Kettenglieder jeweils als Elemente mit einer geschlossenen Außenkontur und geschlossener Außenfläche ausgebildet, so daß diese einen weitestgehend geschlossenen Kanal als Aufnahmeraum für Schläuche und/oder Kabel bilden.

Die Energiezuführungskette gemäß der bevorzugten Ausführungsform wird durch Kettenglieder aus thermoplastischem Kunststoff gebildet.

Die Erfindung wird nachstehend anhand eines in den zeichnungen dargestellten Ausführungsbeispiels erläutert.

Es zeigen:
- Fig. 1: eine Darstellung eines Roboterarms, aus welcher schematisch der Verlauf bzw. die Anordnung der Führung der Schläuche und/oder Kabel zur Versorgung einer nicht dargestellten Anwendungsinstallation ersichtlich ist,
- Fig. 2: einen Abschnitt der erfindungsgemäßen Energiezuführungskette, bestehend aus sechs Einzelelementen,
- Fig. 3: einen Abschnitt der Energiezuführungskette aus Fig. 2, der um 90° gedreht ist,
- Fig. 4: einen Abschnitt einer Energiezuführungskette, deren Kettenglieder nur einen Schwenkfreiheitsgrad zueinander besitzen,
- Fig. 5: die Vorderansicht einer mit Schläuchen und Kabeln bestückten Energiezuführungskette, die von den erfindungsgemäß vorgesehenen Federstäben durchsetzt ist, und zwar von einem Anschlußpunkt aus betrachtet und
- Fig. 6: eine seitliche Schnittansicht der Energiezuführungskette gemäß der Erfindung, und zwar von dem in Fig. 1 mit A bezeichneten Anschlußpunkt zu dem in Fig. 1 mit R bezeichneten Radius.

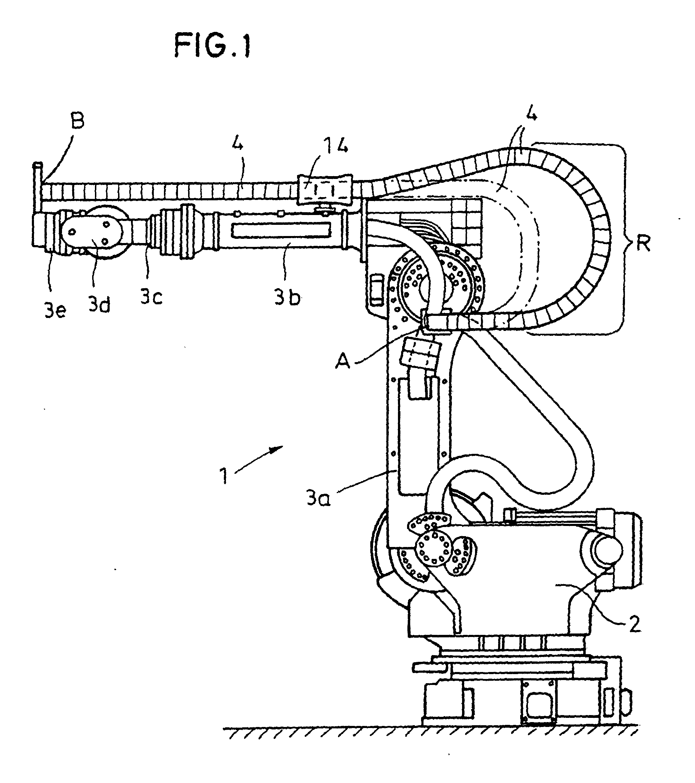

Der in Fig. 1 dargestellte Roboter 1 besitzt eine mit einer nicht näher bezeichneten Antriebseinheit versehene Basis 2 mit an der Basis befestigten Schwenkarmen 3a,b,c,d,e, wobei die Kabel und Schläuche für eine nicht dargestellte Anwendungsinstallation, beispielsweise eine Schweißzange oder dergleichen, entlang der Schwenkarme 3a,b,c,d,e von einem unteren Anschlußpunkt A zu einem oberen Anschlußpunkt B in einer in insgesamt drei Freiheitsgraden bewegbaren Energiezuführungskette 4 geführt sind.

Die Energiezuführungskette 4 ist an dem oberen Anschlußpunkt B um ihre Längsachse drehbar angeschlagen und wird an dem Schwenkarm 3b von einer Buchse 14 längsverschieblich aufgenommen.

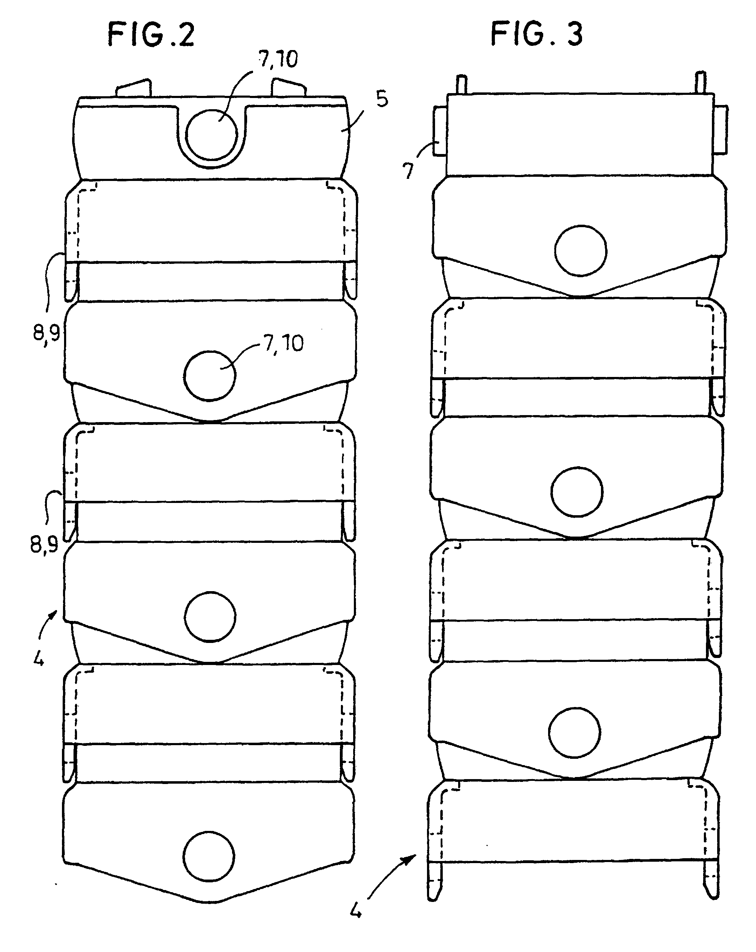

Die Energiezuführungskette 4 ist im einzelnen in den Fig. 2, 3 und 4 dargestellt, wobei diese aus einer Vielzahl von rechteckigen bzw. quadratischen Einzelelementen als Kettenglieder 5 gebildet wird. Jedes Kettenglied umschließt einen zur Aufnahme von Kabeln und/oder Schläuchen vorgesehenen Hohlraum 6. Die Kettenglieder 5 weisen auf ihren Außenflächen jeweils zwei Zapfen 7 und zwei Löcher 8 auf, wobei die Löcher 8 eines Kettenglieds 5 eine erste Gelenkachse 9 und die Zapfen 7 desselben Kettenglieds eine zweite Gelenkachse 10 definieren. Die Löcher 8 und die Zapfen 7 sind jeweils auf gegenüberliegenden Seitenflächen der Kettenglieder 5 angeordnet, so daß die beiden Gelenkachsen 9 und 10 senkrecht zueinander und senkrecht zu der Längsachse der Energiezuführungskette 4 angeordnet sind. Die Löcher 8 sind passend zu den Zapfen 7 ausgebildet, so daß die einzelnen Kettenglieder 5 aus thermoplastischem Kunststoff zu einem weitestgehend geschlossenen Kanal zusammensteckbar sind.

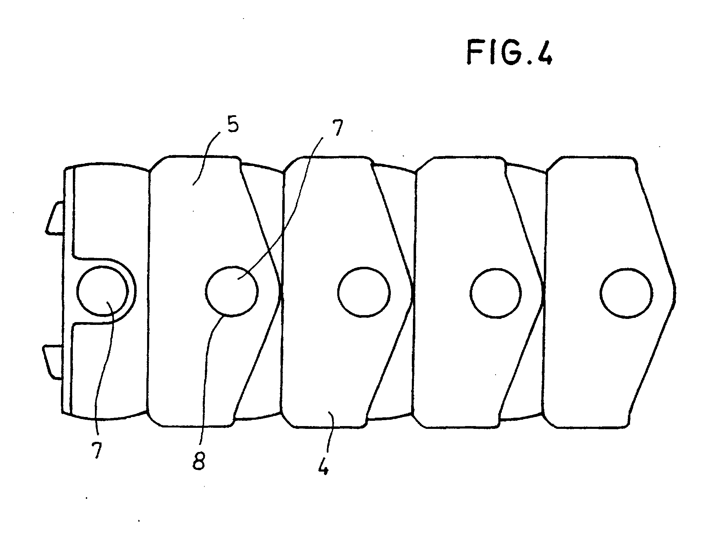

Die Kettenglieder 5 der in den Fig. 2 und 3 dargestellten Abschnitte der Energiezuführungskette 4 besitzen also zueinander zwei Schwenkfreiheitsgrade. Bei dem in Fig. 4 dargestellten Abschnitt der Energiezuführungskette 4 haben die Kettenglieder 5 eine andere Konfiguration. Die Zapfen 7 und Löcher 8 eines Kettenglieds 5 haben eine solche Ausrichtung, daß die Kettenglieder 5 zueinander nur einen Drehfreiheitsgrad aufweisen, wobei jeweils auf einer Seite eines Kettenglieds 5 sowohl ein Loch 8 als auch ein Zapfen 7 vorgesehen ist.

In dem in Fig. 1 mit R bezeichneten Radiusbereich der Energiezuführungskette 4 besitzen die Kettenglieder 5 zueinander nur einen jeweils gleichgerichteten Schwenkfreiheitsgrad, wie dies in Fig. 4 veranschaulicht ist, in den übrigen Abschnitten sind die Kettenglieder, wie in den Fig. 2 und 3 gezeigt, ausgebildet.

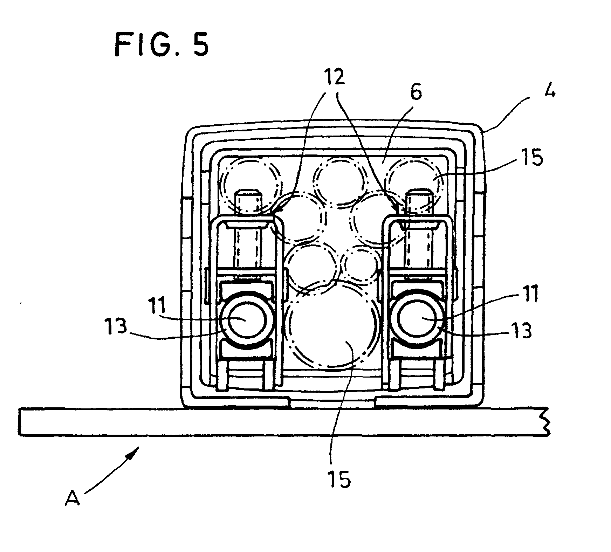

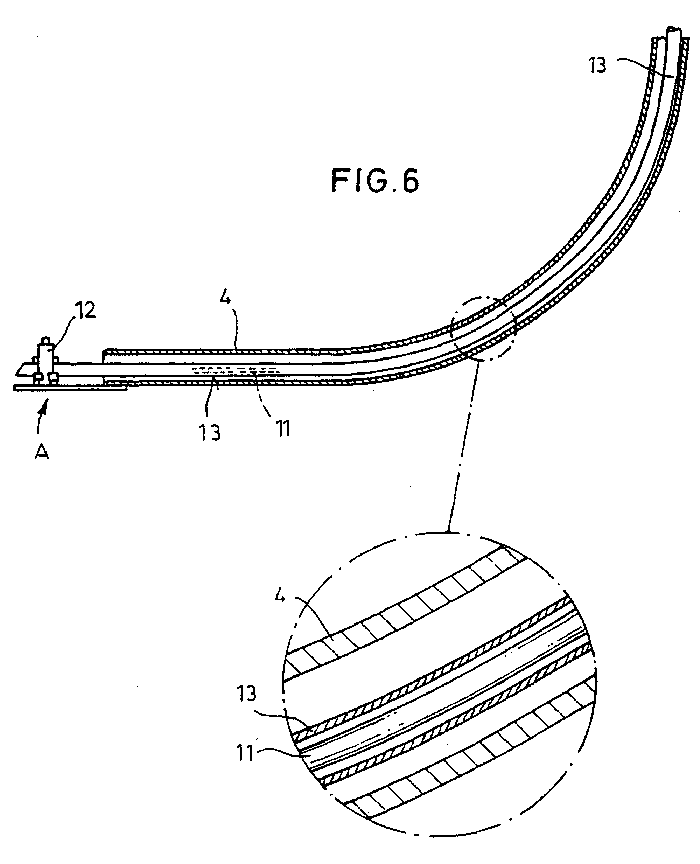

In Fig. 6 ist die Energiezuführungskette von dem unteren Anschlußpunkt A bis in den mit R bezeichneten Radiusbereich im Schnitt dargestellt. In diesem Bereich ist die Energiezuführungskette 4 mit Stäben 11 aus Glasfiber durchsetzt, die an dem unteren Anschlußpunkt A mittels Klemmschellen 12 festgelegt sind. Die Lage der Klemmschellen ist aus Fig. 5 ersichtlich.

Die Stäbe 11, die auch aus Karbonfaser verstärktem Glasfibermaterial oder auch nur aus Karbonfasermaterial bestehen können, sind jeweils in Führungsschläuche 13 eingesetzt, welche sich durchgehend von dem unteren Anschlußpunkt A bis zu dem oberen Anschlußpunkt B erstrecken und an beiden Anschlußpunkten A, B festgelegt sind. Die Stäbe 11, die, wie bereits erwähnt, nur an dem unteren Anschlußpunkt A festgelegt sind, sind von ihrer Länge so gewählt, daß sie sich durch den größtmöglichen Radiusbereich R der Energiezuführungskette erstrekken.

Es ist leicht einsehbar, daß bei einer Abstandsänderung des oberen Anschlußpunkts B zu dem unteren Anschlußpunkt A eine Verkleinerung des Radiusbereichs R eintritt, wie dies mit den dünn gezeichneten Linien in Fig. 1 andeutungsweise dargestellt ist. In diesem Fall verändert sich die Lage der Stäbe 11 bezüglich der diese umgebenden Kettenglieder 5.

Es ist ebenfalls ersichtlich, daß es durch Lösen der Kiemmschellen 12 einfach möglich ist, die in dem Radiusbereich R wirksame Länge der Stäbe 11 einzustellen.

Die Stäbe 11 müssen nicht notwendigerweise aus Glasfiber bestehen, diese können beispielsweise auch aus Federstahl bestehen. Mit 15 sind die den Hohlraum 6 der Energiezuführungskette durchzusetzenden Leitungen bezeichnet, deren Beschaffung und Anordnung beliebig sein kann.

### Energiezuführungskette

### Bezugszeichenliste

- 1: Roboter
- 2: Basis
- 3a,b,c,d,e: Schwenkarme
- A: unterer Anschlußpunkt
- B: oberer Anschlußpunkt
- 4: Energiezuführungskette
- 5: Kettenglieder
- 6: Hohlraum
- 7: Zapfen
- 8: Löcher
- 9: 1. Gelenkachse
- 10: 2. Gelenkachse
- R: Radiusbereich
- 11: Stäbe
- 12: Klemmschellen
- 13: Führungsschläuche
- 14: Buchse
- 15: Leitungen

## Patentansprüche

1. Energiezuführungskette (4) zur Führung von Kabeln und Schläuchen zwischen einem ortsfesten und einem beweglichen Anschlusspunkt oder zwischen zwei relativ zueinander beweglichen Anschlusspunkten, insbesondere als Führung von Schläuchen und/oder Kabeln zur externen Versorgung von Anwendungsinstallationen an Roboterarmen mit mehreren Dreh- und/oder Schwenkfreiheitsgraden, mit einer Anzahl gelenkig miteinander verbundener Kettenglieder (5), die einen Aufnahmeraum für die Kabel und/oder Schläuche bilden, **dadurch** gekenn zeichnet, dass wenigstens ein federnder Stab (11) vorgesehen ist, welcher sich in Längsrichtung der Energiezuführungskette in deren Aufnahmeraum erstreckt und der bei Verschwenkung der Kettenglieder (5) gegeneinander mit zunehmender Biegung Rückstellkräfte erzeugt, die eine Bewegung der Energiezuführungskette (4) in eine gestreckte Lage bewirken.

2. Energiezuführungskette nach Anspruch 1,
**dadurch gekennzeichnet, dass** der Stab (11) wenigstens bezüglich einiger Kettenglieder bei Krümmung der Energiezuführungskette (4) in Längsrichtung verschieblich angeordnet ist.

3. Energiezuführungskette nach einem der Ansprüche 1 bis 2, **dadurch gekennzeichnet, dass** zwei Stäbe (11) aus Glasfiber vorgesehen sind, die sich wenigstens über eine Teillänge der Energiezuführungskette (4) erstrecken.

4. Energiezuführungskette nach einem der Ansprüche 1 bis 3, **dadurch gekennzeichnet, dass** die Stäbe (11) jeweils in einem Führungsschlauch (13) angeordnet sind.

5. Energiezuführungskette nach einem der Ansprüche 1 bis 4, **dadurch gekennzeichnet, dass** die Stäbe (11) außerhalb der Energiezuführungskette (4) oder an einem Endbefestigungsteil der Energiezuführungskette einseitig festgelegt sind.

6. Energiezuführungskette nach Anspruch 4,
**dadurch gekennzeichnet, dass** die Führungsschläuche (13) sich zwischen den Anschlusspunkten der Energiezuführungskette (4) durchgehend erstrecken.

7. Energiezuführungskette nach einem der Ansprüche 1 bis 6, **dadurch gekennzeichnet, dass** zumindest abschnittsweise mehrere zueinander benachbarte Kettenglieder (5) zueinander zwei Schwenkfreiheitsgrade aufweisen, deren Schwenkachsen vorzugsweise um 90° zueinander versetzt ausgerichtet sind, und dass die Kettenglieder (5) wenigstens in dem von den Stäben (11) durchsetzten Bereich nur einen jeweils gleichgerichteten Schwenkfreiheitsgrad zueinander aufweisen.

8. Energiezuführungskette nach einem der Ansprüche 1 bis 7, **dadurch gekennzeichnet, dass** die Kettenglieder (5) jeweils als Elemente mit einer geschlossenen Außenkontur und geschlossenen Außenfläche ausgebildet sind, so dass diese einen weitestgehend geschlossenen Kanal als Aufnahmeraum für Schläuche und/oder Kabel bilden.

## Claims

1. An energy supply chain (4) for guiding cables and hoses between a stationary and a mobile connection point or between two connection points movable relative to one another, in particular as a guide for hoses and/or cables for external supply of end effectors on robot arms having two or more rotational and/or swivelling degrees of freedom, comprising a number of chain links (5) connected together in an articulated manner, which chain links (5) form an accommodation space for the cables and/or hoses, **characterised in that** at least one resilient rod (11) is provided which extends in the longitudinal direction of the energy supply chain in the accommodation space thereof and which, when the chain links (5) are swivelled relative to one another with increasing flexure, produces restoring forces, which effect movement of the energy supply chain (4) into an extended position.

2. An energy supply chain according to claim 1, **characterised in that** the rod (11) is arranged so as to be displaceable in a longitudinal direction at least with regard to two or more chain links when the energy supply chain (4) is curved.

3. An energy supply chain according to one of claims. 1 to 2, **characterised in that** two rods (11) of glass fibre are provided, which extend over at least a proportion of the length of the energy supply chain (4).

4. An energy supply chain according to one of claims 1 to 3, **characterised in that** the rods (11) are each arranged in a guide tube (13).

5. An energy supply chain according to one of claims 1 to 4, **characterised in that** the rods (11) are fixed at one end outside the energy supply chain (4) or on an end mounting portion of the energy supply chain.

6. An energy supply chain according to claim 4, **characterised in that** the guide hoses (13) extend all the way through between the connection points of the energy supply chain (4).

7. An energy supply chain according to one of claims 1 to 6, **characterised in that** at least in portions two or more immediately adjacent chain links (5) exhibit two swivelling degrees of freedom relative to one another, the swivel axes of which are preferably offset by 90° relative to one another, and **in that**, at least in the zone through which the rods (11) pass, the chain links (5) exhibit only one swivelling degree of freedom in the same direction in each case.

8. An energy supply chain according to one of claims 1 to 7, **characterised in that** the chain links (5) each take the form of elements with a continuous outer contour and a continuous outer surface, such that said elements form a very largely continuous channel as an accommodation space for hoses and/or cables.

## Revendications

1. Chaîne d'alimentation en énergie (4) pour le guidage de câbles et de tuyaux flexibles entre un point de raccordement fixe et un point de raccordement mobile ou entre deux points de raccordement mobiles l'un par rapport à l'autre, en particulier comme guidage de tuyaux flexibles et/ou de câbles vers l'alimentation externe d'installations d'application sur des bras de robots avec plusieurs degrés de liberté de rotation et/ou de pivotement, avec un certain nombre de maillons de chaîne (5) reliés les uns aux autres par articulation, qui forment un logement pour les câbles et/ou les tuyaux flexibles, **caractérisée en ce qu'**il est prévu au moins une barre à ressorts (11) qui s'étend dans le sens longitudinal de la chaîne d'alimentation en énergie, dans le logement de celle-ci, et qui, lors du pivotement des maillons de chaîne (5) les uns contre les autres avec une courbure croissante, génère des forces de rappel qui provoquent un mouvement de la chaîne d'alimentation en énergie (4) dans une position allongée.

2. Chaîne d'alimentation en énergie selon la revendication 1, **caractérisée en ce que** la barre (11) est disposée de manière à coulisser dans le sens longitudinal au moins par rapport à quelques maillons de chaîne en cas de courbure de la chaîne d'alimentation en énergie (4).

3. Chaîne d'alimentation en énergie selon l'une quelconque des revendications 1 à 2, **caractérisée en ce qu'**il est prévu deux barres (11) en fibre de verre qui s'étendent au moins sur une longueur partielle de la chaîne d'alimentation en énergie (4).

4. Chaîne d'alimentation en énergie selon l'une quelconque des revendications 1 à 3, **caractérisée en ce que** les barres (11) sont disposées chacune dans un tuyau flexible de guidage (13).

5. Chaîne d'alimentation en énergie selon l'une quelconque des revendications 1 à 4, **caractérisée en ce que** les barres (11) sont fixées d'un côté à l'extérieur de la chaîne d'alimentation en énergie (4) ou à une pièce de fixation d'extrémité de la chaîne d'alimentation en énergie.

6. Chaîne d'alimentation en énergie selon la revendication 4, **caractérisée en ce que** les tuyaux flexibles de guidage (13) s'étendent en continu entre les points de raccordement de la chaîne d'alimentation en énergie (4).

7. Chaîne d'alimentation en énergie selon l'une quelconque des revendications 1 à 6, **caractérisée en ce que**, au moins par tronçons, plusieurs maillons de chaîne (5) adjacents présentent les uns par rapport aux autres deux degrés de liberté de pivotement dont les axes de pivotement sont alignés de préférence avec un décalage de 90° les uns par rapport aux autres et **en ce que** les maillons de chaîne (5) présentent, au moins dans la zone contenue par les barres (11), seulement un degré de liberté de pivotement respectivement dirigé dans le même sens les uns par rapport aux autres.

8. Chaîne d'alimentation en énergie selon l'une quelconque des revendications 1 à 7, **caractérisée en ce que** les maillons de chaîne (5) sont respectivement formés comme éléments avec un contour extérieur fermé et une surface extérieure fermée, de sorte que ceux-ci forment un canal essentiellement fermé comme logement pour des tuyaux flexibles et/ou des câbles.
